Europäisches Patentamt

European Patent Office

Office européen des brevets

(11) Veröffentlichungsnummer: **0 245 748**

**A2**

(12) **EUROPÄISCHE PATENTANMELDUNG**

(21) Anmeldenummer: **87106451.5**

(22) Anmeldetag: **05.05.87**

(51) Int. Cl.⁴: **B60P 3/32**

(30) Priorität: **13.05.86 DE 8612924 U**

(43) Veröffentlichungstag der Anmeldung:
**19.11.87 Patentblatt 87/47**

(84) Benannte Vertragsstaaten:
**AT BE CH DE ES FR GB GR IT LI LU NL SE**

(71) Anmelder: **Tabbert Caravan GmbH**
**Sandweg 1**
**D-6492 Sinntal-Mottgers(DE)**

(72) Erfinder: **Neff, Kurt**
**Schlehenring 6,**
**D-6490 Schluechtern(DE)**

(74) Vertreter: **Czowalla . Matschkur Patentanwälte**
**Dr.-Kurt-Schumacher-Strasse 23 Postfach**
**9109**
**D-8500 Nürnberg 11(DE)**

(54) **Wohnwagen.**

㊌ Die Erfindung bezieht sich auf einen Wohnwagen mit einem in den vorzugsweise keilförmigen Bug integrierten Flaschenkasten, der über eine, einen Teil der Bugwand bildende Tür, zugänglich ist, wobei der Flaschenkasten (7) gleitverschiebbar gelagert zusammen mit der in der Bugwand (2,4) arretierbaren Tür (9) nach vorne herausziehbar ist.

FIG. 2

EP 0 245 748 A2

## Wohnwagen

Die Erfindung bezieht sich auf einen Wohnwagen mit einem in den vorzugsweise keilförmigen Bug integrierten Flaschenkasten.

In den meisten Fällen sind Flaschenkästen gegenüber der Wohnwagenbreite erheblich verschmällerte selbständige Bauteile, die vor der wesentlich vertikalen Bugwand auf dem Zugdeichsel-Balken angeordnet und befestigt sind, wobei die einzige Funktion der Flaschenkästen die Aufnahme der Versorgungsflaschen, insbesondere der Gasflaschen ist, welche aus Sicherheitsgründen nicht im Wohnwageninneren untergebracht sein sollen.

Daneben ist in der deutschen Gebrauchsmusterschrift 31 03 422 auch bereits eine Anordnung vorgeschlagen worden, den Flaschenkasten in den vorzugsweise keilförmigen Bug des Wohnwagenaufbaus zu integrieren, wobei ein Teil der Bugwand als Verschlußdeckel ausgebildet ist über den der Flaschenkasten von außen zugängig ist.

Bei dieser eleganten Lösung ist aber das Auswechseln der relativ schweren Gas-und Wasserflaschen schwierig, da sie aus dem beengten Kasten heraus und wieder in diesen hineingehoben werden müssen.

Um diese Schwierigkeiten zu vermeiden ist erfindungsgemäß vorgesehen, daß der Flaschenkasten gleitverschiebbar gelagert zusammen mit der in der Bugwand arretierbaren Tür nach vorne herausziehbar ist.

Durch die erfindungsgemäße herausziehbare Anordnung des Flaschenkastens ist ein sehr einfaches Herausheben und Wiedereinsetzen der - schweren Flaschen von oben her möglich und sie müssen nicht mühsam wie bei der vorbekannten Lösung über eine Tür in den Stauraum hineingehievt werden.

Ganz besonders einfach gestaltet sich in Weiterbildung der Erfindung sowohl der Aufbau des Flaschenkastens als auch das Auswechseln der darauf angeordneten Flaschen, wenn der im wesentlichen L-förmige, aus einem Teil der Bugwand und des Bodens bestehende herausziehbare Flaschenkasten an Gleitführungen auf der Unterseite des Chassis gelagert ist. Die Gleitführungen können dabei sowohl Teleskopstangen sein, oder aber man kann auch am Flaschenkasten Rollen vorsehen, die in entsprechende Führungsschienen eingreifen.

Durch die einfache L-förmige Ausbildung des herausziehbaren Flaschenkastens, d.h. ohne Seitenwände, Rückwand und Deckwand - diese Teile sind feste Bestandteile des Wohnwagens, die nicht mit herausgezogen werden können - liegen nach dem Herausziehen die Flaschen nicht nur nach oben, sondern auch zur Seite hin frei, wodurch sich das Herausnehmen und Wiederaufsetzen noch einfacher gestaltet.

Schließlich liegt es auch noch im Rahmen der Erfindung, daß der Flaschenkasten Teil eines sich über die gesamte Breite des Wohnwagenaufbaus erstreckenden Staukastens ist, wobei neben dem herausziehbaren Flaschenkasten gegenüber diesem geschlossene Abteile angeordnet sind, die vom Wageninneren aus zugängig sind.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

Fig. 1 eine perspektivische Ansicht eines Wohnwagens mit einem erfindungsgemäß herausziehbaren Flaschenkasten,

Fig. 2 eine vergrößerte Teilansicht des Bugs des Wohnwagens mit herausgezogenem Flaschenkasten und

Fig. 3 eine Seitenansicht des Wohnwagenbugs.

Der dargestellte Wohnwagen ist mit einem keilförmigen Bug 1, bestehend aus einer tief heruntergezogenen ebenen Bugwandfläche 2 mit einem großen, sich im wesentlichen über die gesamte Breite erstreckenden Panoramafenster 3 und einem kurzen mit einer Wölbung in die Bugwandfläche 2 übergehenden schräg nach rückwärts geneigten unteren Bugwandabschnitt 4 versehen. In diesen keilförmigen Bug ist ein von zwei seitlichen Stauabteilen 5 und 6, die vom Innenraum des Wohnwagens her zugänglich sind, flankierter mittiger, herausziehbarer Flaschenkasten 7 angeordnet. Dieser Flaschenkasten besteht im dargestellten Ausführungsbeispiel aus dem entsprechenden Abschnitt der Bodenwand 8 sowie dem die Tür bildenden Abschnitt 9 der Bugwand, d.h. er bildet ein einfaches L-förmiges Bauteil ohne Seitenwände, Rückwand und Deckwand. Der Flaschenkasten 7 ist auf der Unterseite mit Längsstreben 10 versehen, an denen Radpaare 11 befestigt sind, die in querschnittlich C-förmige Führungsschienen 12 eingreifen, unter dem Boden des Wohnwagen-Chassis befestigt sind.

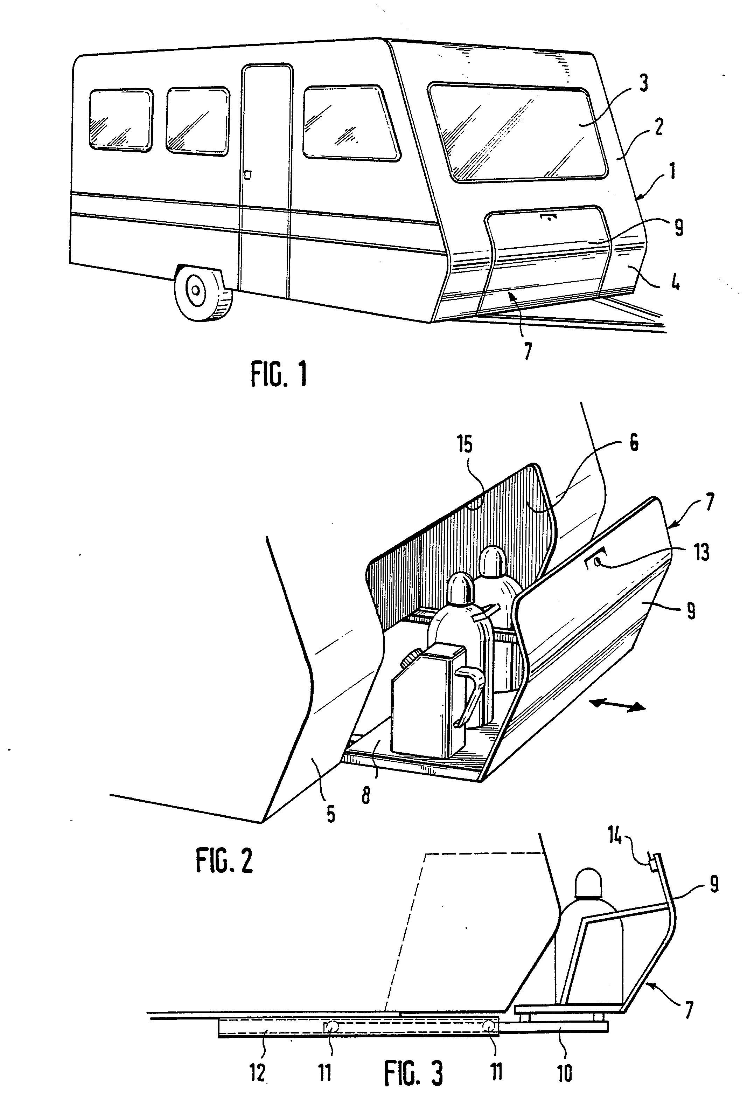

Bei 13 erkennt man den Schließzylinder eines in Fig. 3 schematisch bei 14 angedeuteten Schlosses, dessen Schließriegel im einfachsten Fall die Kante 15 der Bugwand in der Schließstellung untergreift, so daß auf diese Weise der Flaschenkasten arretiert in seiner eingefahrenen Stellung gehalten ist.

**Ansprüche**

1. Wohnwagen mit einem in den vorzugsweise keilförmigen Bug integrierten Flaschenkasten, der über eine, einen Teil der Bugwand bildende Tür, zugänglich ist, dadurch gekennzeichnet, daß der Flaschenkasten (7) gleitverschiebbar gelagert zusammen mit der in der Bugwand (2, 4) arretierbaren Tür (9) nach vorne herausziehbar ist.

2. Wohnwagen nach Anspruch 1, dadurch gekennzeichnet, daß der im wesentlichen L-förmige, aus einem Teil der Bugwand und des Bodens (8) bestehnde herausziehbare Flaschenkasten in Gleitführungen (10, 11, 12) auf der Unterseite des Chassis gelagert ist.

3. Wohnwagen nach Anspruch 2, dadurch gekennzeichnet, daß die Gleitführungen Teleskopstangen sind.

4. Wohnwagen nach Anspruch 3, dadurch gekennzeichnet, daß am Flaschenkasten in Führungsschienen (12) eingreifende Rollen (11) befestigt sind.

5. Wohnwagen nach einem der Ansprüche 1 bis 4, dadurch gekennzeichnet, daß seitlich neben dem nach vorne herausziehbaren Flaschenkasten gegenüber diesem geschlossene Stauabteile angeordnet sind, die vom Wageninneren aus zugänglich sind.

FIG. 1

FIG. 2

FIG. 3